Europäisches Patentamt

European Patent Office

Office européen des brevets

(11) Veröffentlichungsnummer : **0 121 063**
**B1**

(12) ## EUROPÄISCHE PATENTSCHRIFT

(45) Veröffentlichungstag der Patentschrift :
04.03.87

(21) Anmeldenummer : 84101542.3

(22) Anmeldetag : 15.02.84

(51) Int. Cl.⁴ : **B 25 J 17/02**, F 16 H 55/18,
B 25 J 11/00

(54) **Spielfrei einstellbarer Schwenkantrieb für mindestens eine Hauptachse von Manipulatoren.**

(30) Priorität : 09.03.83 DE 3308413

(43) Veröffentlichungstag der Anmeldung :
10.10.84 Patentblatt 84/41

(45) Bekanntmachung des Hinweises auf die Patenterteilung : 04.03.87 Patentblatt 87/10

(84) Benannte Vertragsstaaten :
AT CH DE FR GB IT LI SE

(56) Entgegenhaltungen :
US-A- 3 020 775

(73) Patentinhaber : KUKA Schweissanlagen & Roboter.
GmbH
Blücherstrasse 144
D-8900 Augsburg (DE)

(72) Erfinder : Zimmer, Ernst
Michael-Steinherr Strasse 34
D-8904 Friedberg (DE)

(74) Vertreter : Ernicke, Hans-Dieter, Dipl.-Ing.
Schwibbogenplatz 2b
D-8900 Augsburg (DE)

## Beschreibung

Die Erfindung bezieht sich auf einen spielfrei einstellbaren Schwenkantrieb für mindestens eine Hauptachse von Manipulatoren, bei dem das Abtriebsrad eines motorisch angetriebenen Untersetzungsgetriebes drehstarr mit dem zu verschwenkenden Bauteil verbunden und im Schwenkantrieb ein Zahrad in zwei Radhälften geteilt ist, die gegeneinander über eine torsionselastische Welle bzw. Hülse verspannt sind.

Bei einem Manipulator der bekannten Art kommt es darauf an, eine sogenannte mechanische Hand dreidimensional innerhalb eines großen räumlichen Bereiches möglichst genau zu bewegen, um an einem vorprogrammierten räumlichen Punkt eine bestimmte Arbeit ausführen zu können. Bei der am häufigsten benutzten Gestaltung eines Manipulators ist an einem Grundgestell ein um eine vertikale Achse rotierfähiges Karussell angeordnet, an dem ein, um eine horizontale Achse schwenkbarer Antriebsarm gelagert ist, der seinerseits einen wiederum an einer horizontalen Achse gelagerten Ausleger trägt, an dessen Ende sich die mechanische Hand befindet, die ihrerseits wiederum in mehreren Dimensionen gedreht bzw. geschwenkt werden kann. Mit Hilfe einer solchen Konstruktion kann jeder Raumpunkt innerhalb des maximalen Schwenkbereiches der Schwenkachsen automatisch angesteuert werden.

Bei solchen Manipulatoren ist jeder Schwenkachse des Manipulators ein spezieller Antrieb zugeordnet. Um das optimale Drehmoment des Antriebsmotors zu nutzen, ist es erforderlich, eine große Untersetzung der Antriebsdrehzahl mit Hilfe geeigneter Getriebe zu erreichen.

Manipulatoren sind aber nur dann in der praktischen Anwendung brauchbar, wenn sie das vorgegebene Ziel mit großer Genauigkeit ansteuern können. Die vorbekannten Manipulatoren erfüllen diese Bedingung nur unvollständig, weil das in den verwendeten Getrieben vorhandene Spiel zufolge der großen Ausladung der Ausleger beträchtlich übersetzt wird, was zur Folge hat, daß die mechanische Hand in einem diesem Übersetzungsverhältnis entsprechenden Streubereich ans Ziel gelangt. Besonders auffällig ist diese Ansteuer-Ungenauigkeit dann, wenn das zu bewegende Teil oszillierend, gegebenenfalls sogar über den Totpunkt seiner Schwenkstellung, bewegt werden muß.

Zur Beseitigung dieser Nachteile schlägt die vorveröffentlichte DE-A-31 15 061 vor, im einzelnen Schwenkantrieb mindestens der Hauptachsen das Getriebespiel durch Erzeugung von Torsionsverspannungen aufzuheben. Als Hauptachsen werden die Schwenkachsen des Auslegers, seines Antriebsarmes und des Karussells eines Manipulators bezeichnet. Zu diesem Zweck wird die hochtourig angetriebene Antriebswelle als torsionselastische Welle ausgebildet, an deren beiden Enden je ein Antriebsritzel befestigt wird. Jedes dieser Antriebsritzel wirkt über ein koaxial zur Schwenkachse angeordnetes Untersetzungsgetriebe mit sehr großer Untersetzung auf ein ihm zugeordnetes Abtriebsrad ein, welches im Lagerauge des anzutreibenden Maschinenteiles drehbar gelagert ist. Die Nabe dieses Abtriebsrades wird gegenüber dem ihm zugeordneten Teil des Lagerauges des anzutreibenden Teiles mit Hilfe einer besonderen Spannvorrichtung torsionsverspannt und damit drehstarr mit dem Lagerauge verbunden. Wenn die Torsionsverspannung beider Abtriebsräder nacheinander entgegengesetzten Richtungen vorgenommen wird, wirken sich die Spannkräfte spielaustreibend und tordierend auf die torsionselastische Antriebswelle aus. Auf diese Weise ist es tatsächlich gelungen, die Genauigkeit in der Ansteuerung des Manipulators auf theoretisch vorgegebene Positionen wesentlich zu steigern.

Es hat sich allerdings herausgestellt, daß auf der Basis der vorbekannten Konzeption eine weitere Steigerung der Qualitätsansprüche an einen Manipulator kaum noch möglich ist. Hierzu gehört beispielsweise die Anforderung, den Wirkungsgrad des Manipulators wesentlich zu verbessern, was bei den bekannten Ausführungsformen deshalb nicht erreicht werden kann, weil die dort verwendeten koaxialen Untersetzungsgetriebe mit sehr großem Untersetzungsverhältnis einen relativ geringen Wirkungsgrad besitzen, der konstruktionsbedingt mit zur Zeit bekannten Mitteln nicht gesteigert werden kann.

Außerdem wurde erkannt, daß der erwünschten Beschleunigung der Positioniervorgänge Grenzen gesetzt sind, weil es mit den bekannten Schwenkantrieben nicht möglich war, eine wesentliche Steigerung der Eigenfrequenz und damit eine höhere Steifigkeit der zu bewegenden Teile herbeizuführen. Die mit der vorbekannten Torsionsverspannung erzeugbare Elastizität des Schwenkantriebes ist dann noch nicht genügend, wenn sich bei Drehrichtungswechsel voneinander abweichende Elastizitätsspannungen ergeben. Es ist zwar in der DE-A-31 15 061 zu diesem Zweck schon vorgeschlagen worden, auf die geometrische Mitte der torsionselastischen Antriebswelle einzuwirken, um dadurch gleich große federnde Längen der Antriebswelle zu erhalten. Die dabei allerdings mit erhöhtem konstruktiven Aufwand erreichbare Elastizitäts-Symmetrie kommt aber wegen der eingangs erwähnten Probleme nicht in erwünschtem Maße zur Geltung.

Der Erfindung liegt daher die Aufgabe zugrunde, einen durch Torsionsverspannungen spielfrei einstellbaren, sowie durch elastische Verformung einen höheren Traganteil der drehmomentübertragenden Teile und ihrer Lagerungen anstrebenden und damit einen schwingungssteiferen Schwenkantrieb zu entwickeln, dessen Wirkungsgrad wesentlich gesteigert ist, der eine schnellere Steuerung bzw. Regelung der Positioniervorgänge zufolge Erhöhung der Eigenfrequenz zuläßt und bei dem die Einhaltung einer Elastizitäts-Symmetrie nach beiden Drehrichtungen voll zur Auswirkung kommt.

Ausgehend vom Gegenstand der DE-A-31 15 061 besteht die erfindungsgemäße Lösung dieser Aufgabe aus den im kennzeichnenden Teil des Hauptanspruchs angeführten Merkmalen. Dabei handelt es sich um eine Kombination, deren Einzelmerkmale teilweise vorbekannt sind.

So ist beispielsweise aus der DE-C-22 26 407 ein Manipulator bekannt, bei dem einzelne Stufen der Schwenkantriebe durch Zahnriemengetriebe gebildet sind. Zur Zeit der Offenbarung dieses Standes der Technik waren aber noch keine spielfreien Zahnriemengetriebe bekannt. Deren Einsatz hatte im wesentlichen den Sinn, größere Entfernungen zwischen Antriebsmotor und anzutreibender Welle auf konstruktiv einfache Weise zu überwinden, und die Motordrehzahl auf eine für das nachgeschaltete Getriebe verträgliche Drehzahl zu reduzieren.

Durch die Druckschrift « Metallwissenschaft und Technik », Heft 12, 1969, Seite 1290 und 1291 ist es bekannt, ein spielfreies Zahradgetriebe so auszubilden, daß die Abtriebsräder geteilt und als Radhälften ausgebildet sind. Die eine Radhälfte ist mit einer torsionselastischen Welle drehschlüssig verbunden. Die andere Radhälfte ist über eine starre Hülse mit einem Flansch verbunden, dessen Gegenflansch die torsionselastische Welle aufnimmt. Durch Verdrehen und Verspannen beider Flansche läßt sich somit die Spielfreiheit des Zahnradgetriebes herstellen. Eine solche Anordnung ist aber in Aufbau und Lastverteilung unsymmetrisch und daher nicht geeignet, bei einem Manipulator-Schwenkgetriebe eingesetzt zu werden, bei dem es auf die Elastizitäts-Symmetrie entsprechend der gestellten Aufgabe ankommt.

Mit der erfindungsgemäßen Kombination wird nicht nur die gestellte Aufgabe gelöst sondern eine nicht vorhersehbare Kombinationswirkung erzielt, zu der einige Merkmale in einer Weise beitragen, die bisher unbekannt geblieben ist.

Durch die Aufteilung eines Schwenkantriebes in ein mehrstufiges, nicht koaxial angeordnetes Untersetzungsgetriebe wird zwar ein etwas größerer Platzbedarf herbeigeführt. Da aber die bekannten koaxialen, paarweise gegeneinander verspannten Untersetzungsgetriebe mit hoher Untersetzung vermieden werden, ist eine wichtige Voraussetzung geschaffen, den Wirkungsgrad des Schwenkantriebes wesentlich zu steigern.

Die abtriebsseitig vorgesehene letzte Getriebestufe, welche als Stahlradgetriebe ausgebildet ist, bringt den Vorteil der hohen Untersetzung in einer Stufe. Würde an dessen Stelle ein Zahnriemengetriebe eingesetzt werden, wäre zur Erzeugung der geforderten Untersetzung eine zusätzliche Getriebestufe nötig, weil hochuntersetzende und langsam laufende Zahnriemengetriebe gegenüber Stahlradstufen ein größeres Bauvolumen erfordern, was aufgrund der engen Platzverhältnisse ausgeschlossen ist.

Von entscheidender Bedeutung ist aber der dem erfindungsgemäßen Stahlradgetriebe innewohnende Vorteil, wonach sich der Einfluß des Massenträgheitsmomentes I des anzutreibenden Maschinenteiles bereits in dieser letzten Stahlradstufe entscheidend verringert und damit hinter dieser Stahlradstufe nur noch eine stark reduzierte Wirkung besitzt.

Diese Wirkung hängt mit der mathematischen Erkenntnis zusammen, daß sich der Einfluß des Massenträgheitsmomentes I in Abhängigkeit von der Untersetzung i um den Faktor

$$\frac{1}{i^2}$$

verringert. Bei mehreren Getriebestufen ergibt sich der Faktor

$$\frac{1}{i_1^2} \cdot \frac{1}{i_2^2} \text{ bis } \frac{1}{i_n^2}.$$

Messungen bei einem vierstufigen Versuchsgetriebe mit einer Stahlradstufe und drei vorgeschalteten Zahnriemenstufen haben ergeben, daß die Federkonstante $C_{ges.}$ des gesamten Versuchsgetriebes nur um 17 % kleiner als die Federkonstante $C_{St}$ der Stahlradstufe betrug. Dies bedeutet, daß die Riemengetriebe nur einen ganz geringen Einfluß auf die Federkonstante $C_{ges.}$ des gesamten Versuchsgetriebes hatten.

Verwendet man aber nur eine Stahlradstufe und z. B. zwei vorgeschaltete Zahnriemenstufen, dann ist die Differenz der Federkonstanten $C_{St} - C_{ges.}$ noch geringer als bei dem erwähnten vierstufigen Versuchsgetriebe.

Da aber die Federkonstante C auf die Größe der Eigenfrequenz nach der Formel

$$f = \frac{1}{2\pi} \sqrt{\frac{C}{I}}$$

eine direkte Wirkung hat, ist sie ein wesentlich bestimmender Faktor für die Schwingungssteifigkeit der Konstruktion. Obendrein ist die spielfreie Stahlradstufe aufgrund ihrer geringen Drehzahl als letzte Getriebestufe durch Schmierung mit guthaftendem Langzeitfett über Monate hinweg wartungsfrei. Sie erspart durch größtmögliche Untersetzung eine ganze Getriebestufe und verleiht dem angetriebenen Maschinenteil aufgrund ihrer direkt wirkenden hohen Eigenfrequenz eine gleichfalls hohe Eigenschwingungszahl. Es hat sich nämlich gezeigt, daß Drehschwingungen, die bei Beschleunigung und

3

Verzögerung der Antriebsvorgänge auftreten, schneller abklingen, je größer die Eigenfrequenz des anzutreibenden Maschinenteils ist.

Die Erfindung setzt andererseits die Vorteile von Zahnriemenantrieben, wie z. B. Wartungs- und Spielfreiheit, kostengünstige Bauweise, Überbrückung größerer Strecken zwischen antreibendem und angetriebenem Teil, an solchen Orten ein, von wo aus die Schwingungssteifigkeit der Konstruktion nicht nachteilig beeinflußt werden kann. Deshalb ist es ratsam, mindestens die antriebsseitige Getriebestufe als spielfreies Zahnriemengetriebe auszuführen.

Hinsichtlich der Gestaltung der mittleren Getriebestufen ist dem Fachmann eine größere Freiheit hinsichtlich der Wahl zwischen Stahlrad- oder Zahnriemenstufe gegeben. Entscheidet man sich für Zahnriemengetriebe, wirkt sich dies positiv hinsichtlich der Gesamtkosten und der Wartungsfreiheit aus. Die Erfindung schließt aber den Einsatz eines weiteren Stahlradgetriebes, und zwar bevorzugt an vorletzter Getriebestufe, nicht aus.

Ein weiterer Unterschied zwischen der Erfindung und dem Stand der Technik ergibt sich auch dadurch, daß eine Verzweigung der Antriebsleistung und die doppelte Anordnung von Untersetzungsgetrieben vermieden und der Ort der Torsionsverspannung an eine andere Stelle verlegt worden ist, wo die Einhaltung der geforderten Elastizitäts-Symmetrie konstruktiv einfacher gelöst werden kann. Durch die Teilung des Antriebsritzels des Stahlradgetriebes, also der letzten Getriebestufe, und durch deren Verspannung über eine torsionselastische Welle und eine torsionselastische Hülse, die zueinander koaxial liegen, ist es möglich, die Durchmesser und Wandstärken sowie wirksamen Längen dieser Teile so aufeinander abzustimmen, daß jedes Teil die gleiche Drehsteifigkeit, d. h. Drehelastizität, aufweist.

Die beim Gegenstand der Erfindung verwendeten spielfreien Zahnriemengetriebe sind bekannte Baugruppen, die im Verkehr mit der Kennzeichnung HTD (high torque drive) bezeichnet werden. Es handelt sich um Riemen mit abgerundeten Zahnprofilen, die einen hohen Wirkungsgrad besitzen und deren Räder für spielfreien Lauf gefertigt werden können.

In den Unteransprüchen sind vorteilhafte Ausgestaltungen der Erfindung gekennzeichnet.

Einzelheiten der Erfindung ergeben sich aus den Zeichnungen. In ihnen ist die Erfindung schematisch und beispielsweise dargestellt. Es zeigen :

Figur 1  eine Seitenansicht eines Manipulators,

Figur 2  einen Vertikalschnitt durch einen Schwenkantrieb entlang der Linie II-II in Fig. 1,

Figur 3  einen in vergrößerter Darstellung gezeigten Schnitt durch die Torsionsstufe entlang der Linie III-III in Fig. 2 und

Figur 4  eine Seitenansicht der Torsionsstufe gemäß Fig. 3 in Richtung des Pfeiles A.

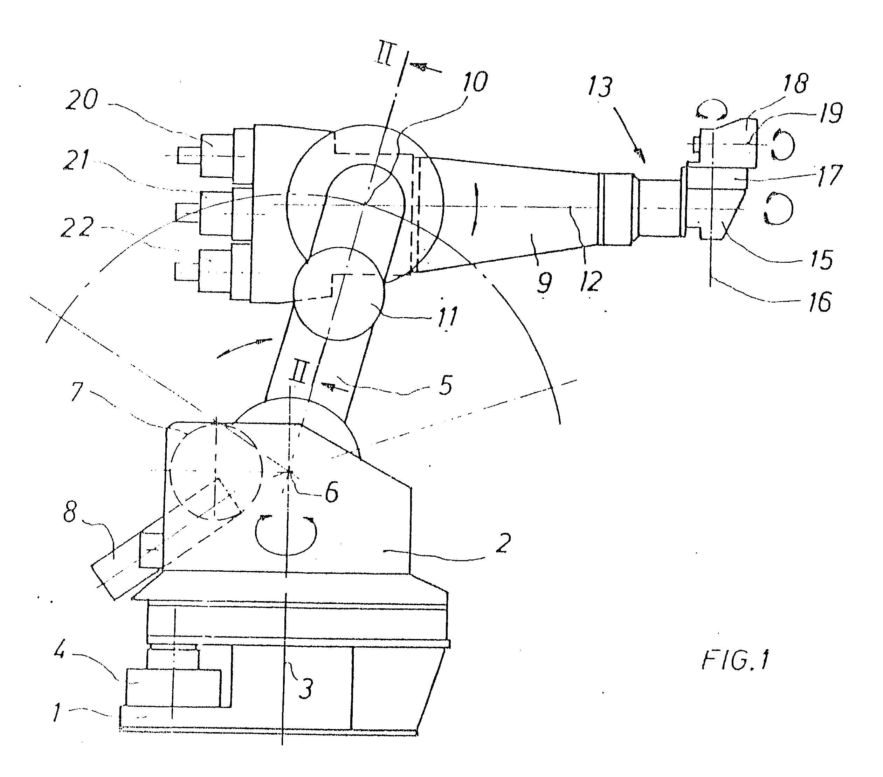

Im Ausführungsbeispiel der Figur 1 ist ein Manipulator dargestellt, um an dieser Figur die Anzahl und die Lage der Achsen der einzelnen zu bewegenden Teile zu verdeutlichen, bei denen der Gegenstand der Erfindung vorteilhafterweise angewandt werden kann.

An einem bodenfesten Grundgestell 1 ist ein sogenanntes Karussell 2 um eine vertikale Drehachse 3 schwenkbar gelagert. Das Karussell 2 wird über einen Antriebsmotor 4 um die Schwenkachse 3 verdreht, wobei die Drehrichtung gewechselt werden kann. An diesem Karussell 2 ist in der Schwenkachse 6 ein Antriebsarm 5 oszillierend schwenkbar gelagert, dessen Schwenkbewegung von dem Antriebsmotor 7 erzeugt wird. Diese Schwenkachse 6 liegt horizontal. Das Gewicht des Antriebsarmes 5 und der daran angeordneten Teile wird durch einen schematisch angedeuteten Gewichtsausgleich 8 austariert.

Am freien Ende des Antriebsarmes 5 ist ein Ausleger 9 um die Schwenkachse 10 gelagert. Die Schwenkbewegung des Auslegers 9 wird von dem Antriebsmotor 11 erzeugt. Dieser Schwenkarm 9 lager seitlich erheblich aus und trägt an seinem freien Ende eine sogenannte mechanische Hand 13, die mit Werkzeugen beliebiger Art ausgestattet sein kann. Es ist z. B. vorgesehen, daß diese mechanische Hand 13 um die Auslegerachse 12 hin- und herdrehbar geführt ist. Die mechanische Hand 13 weist beim Ausführungsbeispiel der Figur 1 ein Eckteil 15, einen daran angeschlossenen Tragarm 17 und ein Schlußteil 18 auf, so daß Drehbewegungen um die Auslegerachse 12, die Schwenkachse 16 und die Schwenkachse 19 durchgeführt werden können.

Am Beispiel der Schwenkachse 10 läßt sich am besten verdeutlichen, daß ein dort vorhandenes Getriebespiel für die Bewegung des Auslegers 9 zu einer wesentlichen Übersetzung im Bereich der mechanischen Hand 13 führt, worauf die mechanische Ungenauigkeit der bekannten Manipulatoren beruht.

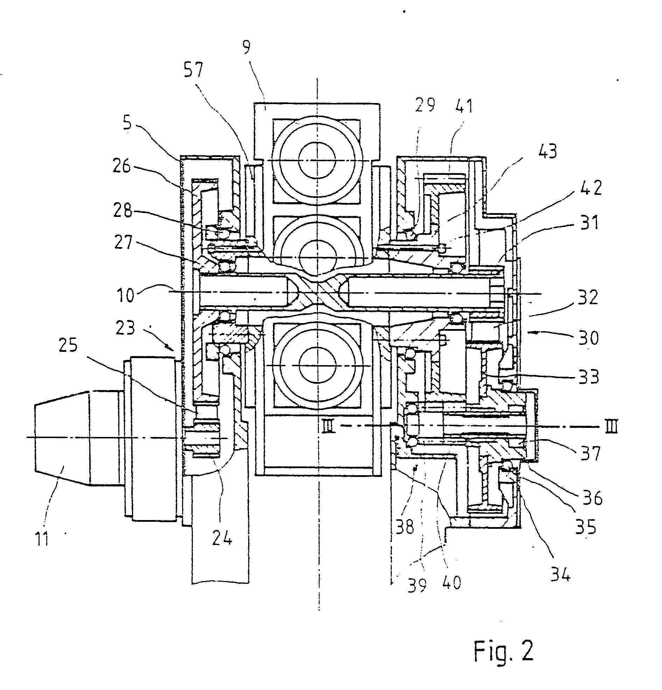

Das in Fig. 2 dargestellte Schwenkgetriebe dient im Ausführungsbeispiel zur Schwenkverstellung des Auslegers 9 um die Schwenkachse 10, zu welchem Zweck der Antriebsmotor 11 verwendet wird. Es ist aber darauf hinzuweisen, daß das Prinzip des in Figur 2 erkennbaren Schwenkantriebes auch für alle oder einige der anderen Achsen verwendbar ist, insbesondere für die Hauptachsen 3 und 6 gemäß Figur 1. Es versteht sich ferner von selbst, daß solche erfindungsgemäßen Schwenkantriebe auch für in anderer Weise konzipierte Manipulatoren mit Vorteil verwendbar sind.

Der Schwenkantrieb gemäß Figur 2 enthält drei Getriebestufen 23, 30 und 38, von denen die erste Getriebestufe 23, welche vom Antriebsmotor 11 zu einer Welle 27 führt, die mit der Schwenkachse 10 übereinstimmt, als spielfreies Zahnriemengetriebe ausgebildet ist. Dieses weist ein Antriebsrad 24, den Zahnriemen 25 und das Abtriebsrad 26 auf. Mit einer solchen Getriebestufe 23 ist beispielsweise im Bereich höherer Drehzahlen eine Untersetzung von 1 : 6 erreichbar. Auf der vom Abtriebsrad 26 angetriebenen Welle 27 sitzt am anderen Ende das Antriebsrad 31 der zweiten Getriebestufe 30, die ebenfalls als spielfreies Zahnriemengetriebe ausgebildet ist. Der vom Antriebsrad 31 angetriebene Zahnriemen 32 führt auf das Abtriebsrad 33. Technisch- und konstruktionsbedingt ist beim Ausführungsbeispiel diese Untersetzung der zweiten Getriebestufe 30 geringer. Sie kann beispielsweise 1 : 3 betragen, weil sie im Bereich niedriger Drehzahlen und größerer Drehmomente liegt und die Platzverhältnisse beengt sind.

Die Welle 27 durchsetzt das Lagerauge 57 des Auslegers 9 und ist über die Lager 28, 29 am Antriebsarm 5 (vgl. auch Figur 1) gelagert. Die zweite Getriebestufe kann bei diesem Ausführungsbeispiel auch als Stahlradstufe gestaltet sein. Müßte ein vierstufiges Getriebe eingesetzt werden, könnte die dritte Getriebestufe als Stahlradgetriebe ausgebildet werden.

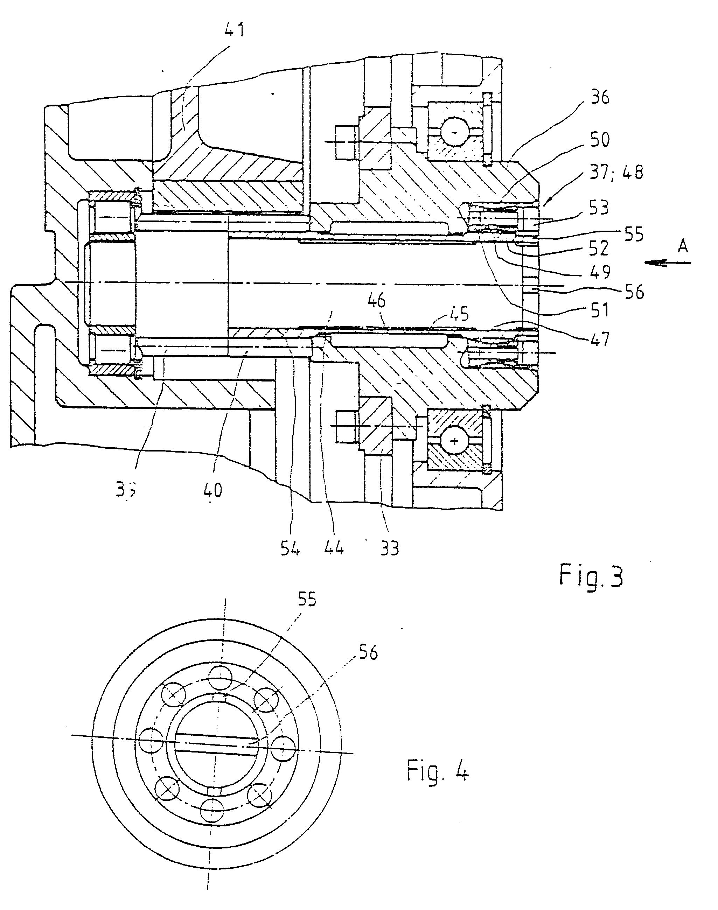

Das Abtriebsrad 33 der im Ausführungsbeispiel gezeigten zweiten Getriebestufe 30 ist in einem Lagergehäuse 34 über das Lager 35 gelagert. Eine mit dem Abtriebsrad 33 verbundene Nabe 36 wirkt über eine Spannanordnung 37, die im einzelnen in Figur 3 beschrieben ist, auf die dritte Getriebestufe 38 ein, welche als Stahlradgetriebe, beispielsweise mit Stirnverzahnung, gestaltet ist. Zum Antrieb dieser dritten Getriebestufe 38 werden zwei Ritzelhälften 39, 40 vorgesehen, die zueinander torsionsverspannt sind. Sie wirken auf das Abtriebsrad 41 ein, dessen Nabe 43 über die Verschraubung 42 mit dem Lagerauge 57 des Auslegers 9 verspannt ist. Damit ist also das Abtriebsrad 41 drehschlüssig mit dem Ausleger 9 verbunden. Zufolge der hohen Untersetzung der Stahlstufe 38 (dritte Getriebestufe), die beispielsweise 1 : 7 betragen kann, wird eine besonders hohe Steifigkeit und damit Eigenfrequenz im Antrieb des Auslegers 9 geschaffen, womit eine schnellere und genauere Zielansteuerung erreichbar ist.

Wie die Figur 3 im einzelnen zeigt, ist die Ritzelhälfte 39 mit einer torsionselastischen Welle 44 und die Ritzelhälfte 40 mit einer torsionselastischen Hülse 45 verbunden, wobei zwischen beiden Teilen 44, 45 im wesentlichen ein Spiel 46 vorhanden ist. Die torsionselastische Hülse 45 ist im Bereiche der ihr zugeordneten Ritzelhälfte 40 über die Lagerstelle 54 auf der torsionselastischen Welle 44 geführt. An der anderen Seite ist eine unmittelbare Lagerstelle 47 zwischen der torsionselastischen Welle 44 und der torsionselastischen Hülse 45 vorgesehen. Zwischen der Nabe 36 und der torsionselastischen Hülse 45 ist ein freier Raum vorgesehen, der zum Einsetzen einer Spannanordnung 37 bzw. eines Spannsatzes 48 dient, dessen Ausgestaltung an sich bekannt ist. Am Außenumfang der torsionselastischen Hülse 45 ist ein Konusring 49 und in der Bohrung der Nabe 36 ein im Schnitt spiegelbildlich gestalteter Konusring 50 geführt. Beide Konusringe 49, 50 werden durch Spannringe 51, 52 voneinander weggespreizt, zu welchem Zweck die Schrauben 53 vorgesehen sind. Die Konusflächen der Ringe 49 bis 52 sind genau aufeinander abgestimmt. Im Verspannungszustand stützt sich der Spannsatz 48 mit dem Konusring 50 an der Bohrung der Nabe 36 ab, wobei der Konusring 49 den ihm zugeordneten Bereich der torsionselastischen Hülse 45 kontraktiert und diesen fest auf der Lagerstelle 47 der torsionselastischen Welle 44 verspannt. Diese Klemmverbindung ist auch bei hohen Drehmomenten absolut drehstarr und trägt dazu bei, den Wirkungsgrad zu steigern und die Spielfreiheit herbeizuführen.

Die Enden der torsionselastischen Welle 44 und der torsionselastischen Hülse 45 sind mit geeigneten Anordnungen, beim Beispiel der Figuren 3 und 4 in Form von Schlitzen 55 und 56, versehen, welche das Einbringen der torsionselastischen Verspannung von Welle 44 und Hülse 45 ermöglicht. Sobald die vorgegebene Torsionsverspannung durch Relativverdrehung von Hülse 45 und Welle 44 herbeigeführt worden ist, wird der Spannsatz 48 geschlossen und damit die drehschlüssige Verbindung zwischen dem Abtriebsrad 33 und den Ritzelhälften 39, 40 herbeigeführt.

Die gewünschte Elastizitäts-Symmetrie für beide Drehrichtungen des Auslegers 9 ergibt sich durch geeignete Dimensionierung der torsionselastischen Welle 44 und der torsionselastischen Hülse 45, wobei die unterschiedlichen Längen dieser Bauteile 44, 45 zu berücksichtigen sind.

Stückliste

1 Grundgestell
2 Karussell
3 vertikale Drehachse (Hauptasche)
4 Antriebsmotor
5 Antriebsarm
6 Schwenkachse (Hauptachse)
7 Antriebsmotor
8 Gewichtsausgleich
9 Ausleger
10 Schwenkachse (Hauptachse)
11 Antriebsmotor
12 Auslegerachse (Nebenachse)
13 Hand
14 —
15 Eckteil
16 Schwenkachse (Nebenachse)
17 Tragarm
18 Schlußteil

19 Schwenkachse (Nebenachse)
20 Antriebsmotor
21 Antriebsmotor
22 Antriebsmotor
23 erste Getriebestufe
24 Antriebsrad
25 Zahnriemen
26 Abtriebsrad
27 Welle
28 Lager
29 Lager
30 zweite Getriebestufe
31 Antriebsrad
32 Zahnriemen
33 Abtriebsrad
34 Lagergehäuse
35 Lager
36 Nabe
37 Spannanordnung
38 dritte Getriebestufe
39 Ritzelhälfte
40 Ritzelhälfte
41 Abtriebsrad
42 Verschraubung
43 Nabe
44 torsionselastische Welle
45 torsionselastische Hülse
46 Spiel
47 Lagerstelle
48 Spannsatz
49 Konusring
50 Konusring
51 Spannring
52 Spannring
53 Schraube
54 Lagerstelle
55 Schlitz
56 Schlitz
57 Lagerauge

**Patentansprüche**

1. Spielfrei einstellbarer Schwenkantrieb für mindestens eine Hauptachse von Manipulatoren, bei dem das Abtriebsrad eines motorisch angetriebenen Untersetzungsgetriebes drehstarr mit dem zu verschwenkenden Bauteil verbunden und im Schwenkantrieb ein Zahnrad in zwei Radhälften geteilt ist, die gegeneinander über eine torsionselastische Welle bzw. Hülse verspannt sind, gekennzeichnet durch die Kombination folgender Merkmale :

1.1 der Schwenkantrieb weist ein mehrstufiges, nicht koaxial angeordnetes Untersetzungsgetriebe (23, 30, 38) auf ;

1.2 die abtriebsseitig vorgesehene letzte Getriebestufe (38) ist als Stahlradgetriebe (39, 40, 41) ausgebildet ;

1.3 mindestens die antriebsseitige Getriebestufe (23) ist als spielfreies Zahnriemengetriebe (24, 25, 26 und 31, 32, 33) ausgebildet ;

1.4 das Antriebsritzel des Stahlradgetriebes (38) ist geteilt ausgebildet, wobei die eine Ritzelhälfte (39) über eine torsionselastische Welle (44) und die andere Ritzelhälfte (40) über eine torsionselastische Hülse (45) mit dem Abtriebsrad (33) der vorhergehenden Getriebestufe (30) in gegeneinander tordierter Verspannung verbunden sind ;

1.5 die torsionselastische Welle (44) und die torsionselastische Hülse (45) weisen gleiche Drehelastizität auf.

2. Schwenkantrieb nach Anspruch 1, dadurch gekennzeichnet, daß die torsionselastische Welle (44) und die torsionselastische Hülse (45) an ihren den Ritzelhälften (39, 40) abgekehrten Seiten unmittelbar aufeinander gelagert und an dieser Lagerstelle (47) mit den Abtriebsrad (33) der vorhergehenden Getriebestufe (30) durch einen die Hülse (45) auf der Welle (44) festklemmenden sowie Spreizwirkung gegenüber dem Abtriebsrad (33) erzeugenden Spannsatz (48) verbunden sind.

3. Schwenkantrieb nach Anspruch 1 oder 2, dadurch gekennzeichnet, daß die torsionselastische Welle (44) und die torsionselastische Hülse (45) an ihren den Ritzelhälften (39, 40) abgekehrten Enden mit einer Anordnung, z. B. radialen Schlitzen (55, 56), zum Ansetzen von Werkzeugen für die Erzeugung einer Torsionsverspannung versehen sind.

4. Schwenkantrieb nach Anspruch 1 oder folgenden, dadurch gekennzeichnet, daß die torsionselastische Hülse (45) im Bereiche ihrer Ritzelhälfte (40) auf der torsionselastischen Welle (44) gelagert (54) ist.

## Claims

1. A pivot drive which can be adjusted so as to be free from play for at least one main axis of manipulators, wherein the drive wheel of a motor-driven step-down gearing is connected to the component to be pivoted so as to be rotationally rigid, and in the pivot drive a gear wheel is divided into two half portions, which are clamped against one another by means of a torsionally resilient shaft of casing, characterised by the combination of the following features :

1.1 the pivot device comprises a non-coaxially disposed multi-stage step-down gearing (23, 30, 38) ;

1.2 the last gearing stage (38) provided towards the drive is formed as a steel wheel gearing (39, 40, 41) ;

1.3 at least the end gearing stage (23) towards the drive is formed as a toothed belt gearing (24, 25, 26 and 31, 32, 33) and is free from play ;

1.4 the drive pinion of the steel wheel gearing (38) is formed separately, one pinion half portion (39) being connected via a torsionally rigid shaft (44) and the other pinion half portion (40) being connected to the drive wheel (33) of the previous gearing stage (30) so as to be torsionally clamped ;

1.5 the torsionally resilient shaft (44) and the torsionally resilient casing (45) have equal rotational resilience.

2. A pivot drive according to claim 1, characterised in that the torsionally resilient shaft (44) and the torsionally resilient casing (45) are disposed directly on top of one another on the sides away from the pinion half portions (39, 40) and in this position (47) are connected to the drive wheel (33) of the previous gearing stage (30) by means of a clamping set (48) which clamps the casing (45) to the shaft (44) and generates an expansion effect relative to the drive wheel (33).

3. A pivot device according to claim 1 or 2, characterised in that the torsionally resilient shaft (44) and the torsionally resilient casing (45) are provided on their ends away from the pinion halves (39, 40) with an arrangement, e. g. radial slots (55, 56), for attaching tools for generating torsional clamping.

4. A pivot device according to any preceding claim, characterised in that the torsionally rigid casing (45) is disposed (54) in the region of its pinion half portions (40) on the torsionally rigid shaft (44).

## Revendications

1. Dispositif d'entraînement en rotation, réglable sans jeu, d'au moins un axe principal de manipulateur, dans lequel la roue menée d'un démultiplicateur entraîné par un moteur est solidaire en rotation d'un élément à faire tourner et, dans le dispositif d'entraînement en rotation, une roue dentée est subdivisée en deux moitiés de roue, qui sont bloquées l'une par rapport à l'autre par un arbre ou par une douille élastique à la torsion, remarquable par les caractéristiques suivantes :

1.1 le dispositif d'entraînement en rotation comporte un démultiplicateur à plusieurs étages (23, 30, 38), qui n'est pas disposé coaxialement ;

1.2 le dernier étage de transmission (38) prévu du côté mené est constitué en transmission à roue en acier (39, 40, 41) ;

1.3 au moins l'étage de transmission (23) du côté menant est agencé en transmission à courroie dentée (24, 25, 26 et 31, 32, 33) sans jeu ;

1.4 le pignon d'entraînement de la transmission à roue en acier (38) est subdivisé, l'une des moitiés de pignon (39) étant reliée, par un arbre (44) élastique à la torsion, et l'autre moitié de pignon (40), par une douille (45) élastique à la torsion, à la roue menée (33) de l'étage de transmission (30) précédent, avec blocage à la torsion l'une par rapport à l'autre ; et

1.5 l'arbre (44) élastique à la torsion et la douille (45) élastique à la torsion ont la même élasticité en rotation.

2. Dispositif d'entraînement en rotation selon la revendication 1, caractérisé en ce que l'arbre (44) élastique à la torsion et la douille (45) élastique à la torsion sont montés directement l'un sur l'autre de leur côté éloigné des moitiés de pignon (39, 40) et, en ce point d'appui (47), sont reliés à la roue menée (33) de l'étage de transmission (30) précédent par une pièce de blocage (48) bloquant la douille (45) sur l'arbre (44) et produisant un effet d'écartement par rapport à la roue menée (33).

3. Dispositif d'entraînement en rotation selon la revendication 1 ou 2, caractérisé en ce que l'arbre (44) élastique à la torsion et la douille (45) élastique à la torsion sont reliés, par leurs extrémités éloignées des moitiés de pignon (39, 40), à un agencement, par exemple à des fentes (55, 56) radiales, destinées à

monter des outils en vue de produire un blocage à la torsion.

4. Dispositif d'entraînement en rotation selon la revendication 1 ou les suivantes, caractérisé en ce que la douille (45) élastique à la torsion est montée dans la région de sa moitié de pignon (40) sur l'arbre (44) élastique à la torsion.

FIG.1

0 121 063

Fig. 2

Fig. 3

Fig. 4